# EUROPEAN PATENT APPLICATION

(11) **EP 3 698 950 A1**
(43) Date of publication of application: **26.08.2020**
(21) Application number: 19158643.7
(22) Date of filing: 21.02.2019
(51) Int. Cl.: B29C 67/24, B29C 45/00, C08L 75/04, B29K 75/00, B29L 31/36, B29L 31/34

(54) **INJECTION MOLDING PROCESS USING 1K POLYURETHANE**

(71) Applicant: Henkel AG & Co. KGaA, 40589 Düsseldorf (DE); OptiMel Schmelzgusstechnik GmbH & Co. KG, 58638 Iserlohn (DE)
(72) Inventor: REQUIN, Jean-Louis, 59940 Le Doulieu (FR); SKORCZ, Adrian, 58636 Iserlohn (DE); NAPPO, Guy, 94220 Charenton (FR); BRACHMANN, Matthias, 80803 München (DE)
(74) Representative: Viering, Jentschura & Partner mbB Patent- und Rechtsanwälte

(57) **Abstract**

The invention relates to a method for producing a molded article by injection molding using a heat-curable 1K polyurethane (PU) composition as well as the molded articles obtained using said method.

## Description

The invention relates to a method for producing a molded article by injection molding using a heat-curable 1K polyurethane (PU) composition as well as the molded articles obtained using said method.

Molded articles are commonly formed by injection molding, using an injectable polymer composition that is injected into a cavity formed by the mold and then cured. Hotmelt molding or low pressure molding is an injection molding technology which is mainly used to seal electric and electronic parts, such as cables, connectors, sensors and printed circuit boards, against harsh environment, such as water and oils. At the same time, they provide a mechanical protection by forming a solid housing by molding.

The thermoplastic, non-reactive materials commonly used for these technologies are typically based on polyamides. These existing methods have some drawbacks which limit the number of applications. Firstly, they provide for poor adhesion on some substrates, such as metals. This leads to leakage against water, oil and the like, which in turn can lead to failure of the respective article. Secondly, polyamides are prone to high moisture uptake. This is a risk for applications in electronics. While alternative polymers exist, such as moisture-curing polyurethanes, these have other disadvantages. Thirdly, existing materials have poor humidity resistance, meaning that they break down due to hydrolysis at increased temperatures and increased humidity. This also results in application failure. Furthermore, these materials have poor compatibility to PVC, as at temperatures higher than 100°C undesired reactions between HCl (from PVC) and the polyamides occur. While these can be avoided by using different thermoplastics, as mentioned above, these have other drawbacks. Finally, the polyamide materials have poor chemical fluid resistance, such as alcohols, glycol, petrol, add blue and acids.

While reactive injection molding, such as 2K PU molding, represents an alternative that overcome some of the above disadvantages, it has other drawbacks. First, it requires mixing of 2 components. As these react with each other, such compositions have short open times after mixing. It further requires heat cure in an oven, which is time consuming. Finally, such materials are often difficult to de-mold and stick to the mold.

Another alternative are shrinking tubes, which are especially used for cable molding. These show similar adhesion problems as the above-described polyamide hotmelt molding materials. Furthermore, these are not able to cover complex shaped articles.

While 1K polyurethane moisture-reactive compositions represent another alternative, these have the drawback that skin formation inhibits deep cure in the inner part of the material. Therefore, it is only possible to use this technology for layers of a thickness of 2 mm or less, since otherwise the curing is incomplete, and the material stays soft.

Potting, housing and gasketing concepts require the extra housing and depending on the type of material used suffer from the same advantages listed above for the commonly used materials.

Accordingly, there is still need in the art for improved methods for the production of molded articles by injection molding that overcome the drawbacks of existing techniques outlined above.

The inventors have now found that the shortcomings of existing techniques may be overcome by the use of heat-curable 1K PU compositions in an injection molding process.

In a first aspect, the present invention is therefore directed to a method for producing a molded article comprising:
(1) providing a reactive heat-curable one-component polyurethane (PU) composition;
(2) providing an injection mold assembly defining a cavity and an injection port communicating with the cavity;
(3) injecting the reactive heat-curable one-component PU composition into the cavity to fill the cavity; and
(4) curing the reactive heat-curable one-component PU composition by heating the injection mold assembly to form the molded article

In another aspect, provided herein is the molded article obtainable using the methods described herein.

Other features and aspects of the subject matter are set forth in greater detail below.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules. For example, "at least one polyol" means that at least one type of molecule falling within the definition for a polyol is used but that also two or more different molecule types falling within this definition can be present, but does not mean that only one molecule of said polyol is present.

"About", as used herein in relation to a numerical value, means said value ±10%, preferably ±5%.

If reference is made herein to a molecular weight, this refers to the average number molecular weight Mₙ, if not explicitly stated otherwise. The number average molecular weight Mₙ of polymers can be calculated based on end group analysis (OH numbers according to DIN EN ISO 4629, NCO content according to *EN ISO* 11909) or can be determined by gel permeation chromatography according to DIN 55672, in particular DIN 55672-1 with THF as the eluent. If not stated otherwise, all given molecular weights are those determined by gel permeation chromatography according to DIN 55672-1 with THF as the eluent. The weight average molecular weight M_{w} can be determined by GPC, as described for Mₙ.

All percentages given herein in relation to the compositions or formulations relate to weight % relative to the total weight of the respective composition or formula, if not explicitly stated otherwise.

The present invention is directed to a method for producing a molded article comprising:
(1) providing a reactive heat-curable one-component polyurethane (PU) composition;
(2) providing an injection mold assembly defining a cavity and an injection port communicating with the cavity;
(3) injecting the reactive heat-curable one-component PU composition into the cavity to fill the cavity; and
(4) curing the reactive heat-curable one-component PU composition by heating the injection mold assembly to form the molded article.

Reactive polyurethane compositions have been widely used in structural applications and assemblies. However, commonly used adhesives consist primarily of isocyanate-functional polyurethane prepolymers that react with surface or ambient moisture in order to extent the backbone and thus form a polyurethane polymer. Isocyanate-functional polyurethane prepolymers are conventionally obtained by reacting diols with diisocyanates. Through the diffusion of moisture from the atmosphere or the substrates into the adhesive and subsequent reaction, the isocyanate-functional polyurethane prepolymers cure under atmosphere conditions. The obtained adhesive product is a crosslinked material held together primarily through urea groups and urethane groups. Reactive hot-melt adhesives based on isocyanate-functional polyurethane prepolymers are described for example by H. F. Hüber and H. Müller in "Shaping Reactive Hotmelts Using LMW Copolyesters", Adhesives Age, November 1987, pages 32 to 35.

However, as already mentioned above, such moisture-curing PU compositions have the disadvantage that they are not ideal for structural applications, as after skin formation on the surface, it is difficult to ensure deep curing. Accordingly, they are not ideally suited for applications in which molded articles or gaskets are formed.

While 2K PU compositions could overcome some of these drawbacks, these have the disadvantage that the handling of 2 separate compositions that need to be mixed before curing is more demanding and laborious and that these compositions have a limited open time once mixed.

It has now been discovered that by using heat-curable 1K polyurethane compositions the above drawbacks are overcome in that they allow a simple process in which the composition is injected into a cavity formed by a mold and then cured by application of heat. As this curing is comparably fast and efficient and can be controlled by temperature regulation, this process provides for a fast, simple and cost-efficient method for the production of molded articles. Furthermore, in such an embodiment, the curing speed is completely independent of humidity.

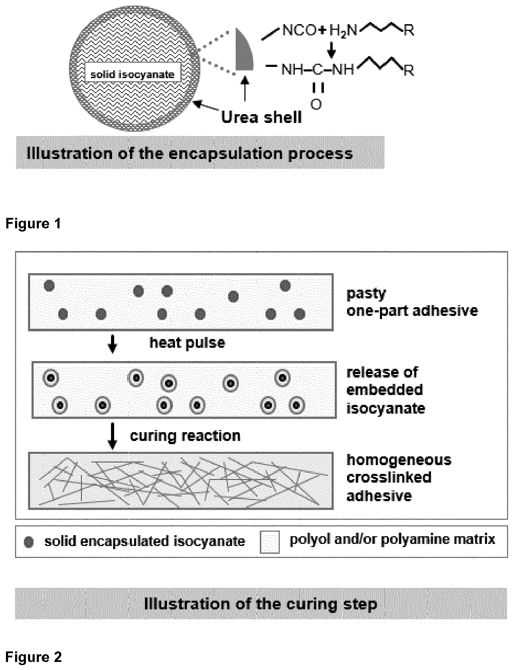

The heat-curable 1K PU compositions used in the methods of the invention are well-known in the art, but currently used as bonding adhesives but not as structural materials. Typically, such PU compositions comprise a latent hardener in a resin matrix, with the hardener getting activated by elevated temperatures and then starting the curing reaction. In various embodiments, the latent hardener is a polyisocyanate which is encapsulated in a suitable capsule, the wall of which may be made of any suitable material, such as a urea-based polymer including special (poly)amines that react with the to-be-encapsulated polyisocyanate. This is schematically shown in **Figure 1**. In various embodiments, the latent hardener is based on a specific polyfunctional isocyanate in form of a solid, such as a crystalline powder, which is encapsulated with dedicated non-sterically hindered amines. In various embodiments, the encapsulated polyisocyanate is toluene diisocyanate (TDI) dimer. In various embodiments, the amine is a monoamine, such as an aliphatic monoamine, for example C₁-C₂₀ alkylamines, including but not limited to straight chain alkylamines, e.g. n-butyl-, n-pentyl, n-hexyl-, n-heptyl, n-octyl-, n-nonyl-, n-decyl-, n-undecyl- or n-dodecyl-monoamine. As shown in Figure 1, the amine may be an amine of the formula H₂N-(CH₂)₃-R, with R being any suitable moiety, such as a substituted or unsubstituted alkyl moiety with up to 15 carbon atoms, for example 3-7 carbon atoms. In various embodiments, it is however preferred that the amine used for capsule formation is a polyamine having at least two primary amine groups. These may also be used in combination with monoamines, such as those disclosed above. Suitable diamines and polyamines, include, but are not limited to diethylamine, isophorone diamine (3-Aminomethyl-3,5,5-trimethylcyclohexylamine), 4,4'-diaminodicyclohexylmethane, trimethyl hexamethylene diamine (2,2,4-Trimethylhexamethylenediamine or 2,4,4-Trimethylhexamethylenediamine and di-, tri- and polyamines on the basis of polyethers, in particular polyoxyethylene or polyoxypropylene, including but not limited to non-sterically hindered polyamines, such as those commercially available under the tradename Jeffamine®, such as Jeffamine® T 403 and Jeffamine® D 400 (Huntsman).

The type and the content of the encapsulating agent may influence strongly the activation temperature of the heat-curable 1K PU. In addition, the powdered polyfunctional isocyanate may in some embodiments have a specific particle size distribution in order to obtain stable and reproducible encapsulation result.

Generally, encapsulation is achieved by exposing the polyisocyanate in form of particles or aggregates in the desired size and shape to the amine components. In the following reaction, the isocyanate groups exposed on the surface of the polyisocyanate particle or aggregate but not those in the inner region of the particle/aggregate react with the amine, the amine and the isocyanate group forming a urea bond and the amines tethered to the surface forming the capsule shell. If the amines used are aliphatic/polyether amines, for example, a urea shell with aliphatic/polyether chains on the surface would form (See **Figure 1**).

In various embodiments, the hardener may also comprise or consist of a NCO-terminated prepolymer, typically a NCO-terminated PU prepolymer obtainable by reaction of a polyol with a molar excess of polyisocyanate. In such embodiments, the resulting prepolymer should be a solid, in particular a crystalline solid. "Solid", as used in this context, means that the referenced material is solid at standard conditions, i.e. at 20°C and 1013 mbar.

Such latent hardeners are known and available in the art. Suitable hardeners of this type are for example described in international patent publication WO 98/13406 A1 and patent publications, the content of which is hereby incorporated by reference in its entirety.

The latent hardener / encapsulated isocyanate itself is formulated in a resin matrix, which contains polyols and / or polyamines, which do not show the tendency to react with the encapsulated isocyanate at ambient temperature. In case the hardener is a polyisocyanate, the resin is a polyol or polyamine, typically a polyamine or polyamine/polyol combination, preferably a polyamine.

As soon as the activation temperature is achieved, the encapsulated isocyanate can be released, and the cross-linking commences immediately, resulting in a thorough curing process irrespective of the level of ambient moisture present. This is schematically shown in **Figure 2**. With activation occurring at temperatures above 80 °C, good storage stability of the products at temperatures up to 40 °C is ensured. It is generally preferred that the PU compositions of the invention do not get activated at temperatures in the range of up to 50°C, in particular at about 40°C, to ensure that no activation occurs during processing. Activation is preferred to occur at temperatures above 80°C, preferably in the temperature range of about 85-100 °C. It is understood that higher temperatures than the actual activation temperature may be used to ensure proper curing.

Although the PU compositions are described herein by reference to an exemplary composition where the polyisocyanate is the hardener and a polyol and/or polyamine is the resin matrix, it is understood that compositions in which a polyol or polyamine is used as the hardener and the polyisocyanate or an NCO-terminated prepolymer is used as the resin are also possible. Such embodiments are thus also intended to be encompassed by the present invention.

Any suitable compound, which contains two or more isocyanate groups, may be used in the PU compositions of this invention. Organic polyisocyanates, which may be used to practice the invention, include alkylene diisocyanates, cycloalkylene diisocyanates, aromatic diisocyanates and aliphatic-aromatic diisocyanates. Specific examples of suitable isocyanate-containing compounds include, but are not limited to, ethylene diisocyanate, ethylidene diisocyanate, propylene diisocyanate, butylene diisocyanate, trimethylene diisocyanate, hexamethylene diisocyanate, toluene diisocyanate, cyclopentylene-1,3-diisocyanate, cyclo-hexylene-1,4-diisocyanate, cyclohexylene-1,2-diisocyanate, 4,4'-diphenylmethane diisocyanate, 2,2-diphenylpropane-4,4'-diisocyanate, xylylene diisocyanate, 1,4-naphthylene diisocyanate, 1,5-naphthylene diisocyanate, m-phenylene diisocyanate, p-phenylene diisocyanate, diphenyl-4,4'-diisocyanate, azobenzene-4,4'-diisocyanate, diphenylsulphone-4,4'-diisocyanate, 2,4-tolylene diisocyanate, dichlorohexa-methylene diisocyanate, furfurylidene diisocyanate, 1-chlorobenzene-2,4-diisocyanate, 4,4',4"-triisocyanatotriphenylmethane, 1,3,5-triisocyanato-benzene, 2,4,6-triisocyanato-toluene, 4,4'-dimethyldiphenyl-methane-2,2',5,5-tetratetraisocyanate, and the like. While such compounds are commercially available, methods for synthesizing such compounds are well known in the art. Preferred isocyanate-containing compounds are those that are (crystalline) solids at room temperature, including but not limited to methylene diphenyl diisocyanate (MDI) and toluene diisocyanate (TDI) polymers, such as dimers or trimers, in particular TDI dimers with urea or urethdione bridges. In embodiments where the latent hardener is a polyisocyanate which is encapsulated in a suitable capsule, the polyisocyanate is typically solid and crystalline, thus TDI dimers are particularly preferred in this case.

In the present invention, upon curing, the polyols and/or polyamines react with isocyanate to produce a polyurethane polymer.

Suitable polyols include, without limitation, polyhydroxy ethers (substituted or unsubstituted polyalkylene ether glycols or polyhydroxy polyalkylene ethers), polyhydroxy polyesters, the ethylene or propylene oxide adducts of polyols and the monosubstituted esters of glycerol, and "polymer polyols" (i.e., graft polyols containing a proportion of a vinyl monomer, polymerized in situ) as well as mixtures thereof. While such compounds are commercially available, methods for synthesizing such compounds are well known in the art. In various embodiments of the present invention, the polyols are selected from polyester polyols, polyether polyol, and combination thereof.

Suitable polyether polyols include linear and/or branched polyethers having plural numbers of ether bonds and at least two hydroxyl groups, and contain substantially no functional group other than the hydroxyl groups. Examples of the polyether polyol may include polyoxyalkylene polyol such as polyethylene glycol, polypropylene glycol, polytetramethylene glycol, polybutylene glycol and the like. Further, a homopolymer and a copolymer of the polyoxyalkylene polyols or mixtures thereof may also be employed. Particularly preferable copolymers of the polyoxyalkylene polyols may include an adduct of at least one compound selected from the group consisting of ethylene glycol, propylene glycol, diethylene glycol, dipropylene glycol, triethylene glycol, 2-ethylhexanediol-1,3,glycerin, 1,2,6-hexane triol, trimethylol propane, trimethylol ethane, tris(hydroxyphenyl)propane, triethanolamine, triisopropanolamine; with at least one compound selected from the group consisting of ethylene oxide, propylene oxide and butylene oxide. While such compounds are commercially available, methods for synthesizing such compounds are well known in the art. Non-limiting examples of commercially available polyols which may be used in the practice of the invention include polyethers such as polyether triol, such as those with a molecular weight of about 6000, OH-terminated polybutadienes, such as those with a molecular weight of about 2800, castor oil, and the OH-terminated prepolymer available under the tradename Loctite UK 8201 HF (Henkel).

Suitable polyester polyols are formed from the condensation of one or more polyhydric alcohols having from about 2 to about 15 carbon atoms with one or more polycarboxylic acids having from about 2 to about 14 carbon atoms. Examples of suitable polyhydric alcohols include ethylene glycol, propylene glycol such as 1,2-propylene glycol and 1,3-propylene glycol, glycerol, pentaerythritol, trimethylolpropane, 1,4,6-octanetriol, butanediol, pentanediol, hexanediol, dodecanediol, octanediol, chloropentanediol, glycerol monallyl ether, glycerol monoethyl ether, diethylene glycol, 2-ethylhexanediol, 1,4-cyclohexanediol, 1,2,6-hexanetriol, 1,3,5-hexanetriol, 1,3-bis-(2-hydroxyethoxy)propane and the like. While such compounds are commercially available, methods for synthesizing such compounds are well known in the art. Commercially available semicrystalline polyester polyols useful in the invention include, for example, Dynacoll 7130, 7240, and 7360 (Creanova), Fomrez 66-32 (Crompton) and Rucoflex S-105-30 (Bayer).

Suitable hydroxyl polycarbonates can be obtained by reaction of carbon acid derivatives, e.g. diphenyl carbonate, dimethyl carbonate or phosgene with diols. Suitable examples of such diols include ethylene glycol, 1,2- and 1,3-propanediol, 1,3- and 1,4-butanediol, 1,6-hexanediol, 1,8-octanediol, neopentyl glycol, 1,4-bishydroxymethyl cyclohexane, 2-methyl-1,3-pro-panediol, 2,2,4-trimethyl pentanediol-1,3, dipropylene glycol, polypropylene glycols, dibutylene glycol, polybutylene glycols, bisphenol A, tetrabromobisphenol A as well as lactone-modified diols. The diol component preferably contains 40 to 100 wt. % hexanediol, preferably 1,6-hexanediol and/or hexanediol derivatives. More preferably, the diol component includes examples that in addition to terminal OH groups display ether or ester groups.

The hydroxyl polycarbonates should be substantially linear. However, they can optionally be slightly branched by the incorporation of polyfunctional components, in particular low-molecular polyols. Suitable examples include glycerol, trimethylol propane, hexanetriol-1,2,6, butanetriol-1,2,4, trimethylol propane, pentaerythritol, quinitol, mannitol, and sorbitol, methyl glycoside, 1,3,4,6-dianhydrohexites.

Suitable polycarbonate polyols are, without limitation, those obtainable under the trademark names Desmophen® C3200 (Bayer) and Kuraray® C2050 (Poly-(3-methyl-1,5-pentanediol, 1,6-hexanediol)carbonate; Kuraray).

Generally, there is no limitation for the selection of polyols to be used in the present invention, as long as they are compatible with other optional components, and do not have a negative effect on the desired properties of the PU composition. In various embodiments, it is preferred that the used polyols are not highly polar.

Alternatively, or in addition to the polyols, polyamines can be used in the resin or as the resin. The polyamines can be diamines, triamines or higher amines, with sterically hindered polyamines generally being preferred. Exemplary polyamines that are suitable for use in or as the resin include, but are not limited to, diethyltoluenediamine and the polyetheramines sold under the tradename Jeffamine® (Huntsman), in particular the diamines or triamines that are based on a polypropylene glycol (PPG) backbone or PPG-containing backbone, such as Jeffamine® T 3000 and T 5000. Also suitable are polyesteramines. Generally, it is preferred that the resin polyamines are less reactive compared to the amines used for forming the latent hardener encapsulate. This may for example be ensured by using polyamines for the resin that are more sterically hindered than the amines used for encapsulation of the isocyanate. In addition, it is preferred that the resin polyamines are not highly polar.

In various embodiments, it is preferred to use the above-described polyamines as the resin or as a resin component.

In various embodiments, the heat-curable 1K polyurethane composition comprises
(i) at least one polyol or polyamine, preferably polyamine;
(ii) at least one polyisocyanate, the at least one polyisocyanate being encapsulated in a heat-activatable capsule; and
wherein the molar ratio of the NCO groups of said polyisocyanate (ii) to the sum of hydroxyl or amine groups of said polyol(s) or polyamine(s) (i) is less than 1.00:1.

The PU composition according to the present invention has an NCO to hydroxyl/amine group ratio of less than 1:1. In preferred embodiments the ratio is in a range having any combination of an upper limit selected from less than 0.99: 1, 0.975: 1, 0.95:1, 0.9:1, 0.85:1, 0.8:1, 0.75:1 or 0.7:1 and having a lower limit selected from 0.65:1, 0.7:1, 0.75:1, 0.8:1, 0.85:1, 0.9:1. In more preferred embodiments the NCO to hydroxyl/amine ratio is in the range of 0.65 to 0.95:1. In even more preferred embodiments the ratio is 0.7 to 0.9:1. The NCO to hydroxyl/amine ratio, as used in this context, refers to the molar ratio of NCO-groups to hydroxyl and amine groups in the components used for the production of the TPU. The excess of hydroxyl or amine groups means that the PU obtained after curing is preferably hydroxyl- or amine-terminated.

Alternatively, the ratio may be such that the resulting PU is NCO-terminated. For this, the molar ratio of the NCO groups of said polyisocyanate (ii) to the sum of hydroxyl or amine groups of said polyol(s) or polyamine(s) (i) is greater than 1.00:1.00, for example 1.1:1. In such embodiments, the ratio of hoydroxyl/amine groups to NCO groups can be in the range having any combination of an upper limit selected from less than 0.99: 1, 0.975: 1, 0.95:1, 0.9:1, 0.85:1, 0.8:1, 0.75:1 or 0.7:1 and a lower limit selected from 0.65:1, 0.7:1, 0.75:1, 0.8:1, 0.85:1, 0.9:1. In more preferred embodiments the ratio is in the range of 0.65 to 0.95:1. In even more preferred embodiments the ratio is 0.7 to 0.9:1.

Other additives inert to the other components comprised in the PU composition used according to the present invention and conventionally used in the art of PU formulations to satisfy different properties and meet specific application requirements can optionally be included from 0 wt.-% to about 40 wt.-%, for example up to about 20 wt.-%, in the 1K PU composition used in accordance with this invention. Such additives include, for example, diluents, plasticizers, fillers, drying agents, rheology modifiers, pigments, dyestuffs, curing catalysts, adhesion promoters, which may be incorporated in minor or larger amounts into the adhesive formulation, depending on the purpose.

In one embodiment, the viscosity of the PU composition used in the present invention at 23°C is from 50 to 300 mPas, measured with a rheometer, such as Physica MCR 302, PP25.

In various embodiments, the curable composition has a glass transition temperature T_{g} of below - 20°C, preferably between -20 and -60°C.

The PU compositions preferably have activation temperatures in the range of between 75 and 100°C, preferably between 80 and 95°C.

Suitable compositions are, for example and without limitation, commercially available from Henkel and sold under the tradename TEROSON® PU. Particularly preferred is the composition sold under the tradename TEROSON® PU 1510.

In various embodiments of the methods described herein, the step of injecting the reactive heat-curable one-component PU composition into the cavity is carried out at a mold temperature of about 10 to about 66°C, preferably about 40 to about 60°C, preferably 50 to 60°C. It is understood that the temperature is selected such that it is below the activation temperature of the latent hardener in the PU composition, preferably at least 10°C below the activation temperature, preferably at least 20°C below the activation temperature of the hardener. "Activation temperature", as used herein, relates to the temperature at which the reaction of the hardener with the resin starts and proceeds, typically until full curing is achieved. Pre-heating the mold to a temperature above ambient has the advantage that this ensures complete curing during the curing step and shortens the curing cycle times.

The injection is carried out by a suitable means, such as a pump, all of which are known to those skilled in the art. The injection is done by use of the injection port in communication with the cavity. In various embodiments, the mold assembly can comprise more than one injection port and/or one or more outlet ports in communication with the cavity to allow excess material to flow out of the cavity.

The selection of the mold assembly is dependent on the type of molded article to be formed. Typical mold assemblies for injection molding are made from metals, such as aluminum. The mold assembly may be designed for forming a gasket, such as those described in international patent publication WO 2006/086324 with the exception that they do not need to be suitable for cure by actinic radiation.

In various embodiments, the method is not involving a high temperature, high pressure liquid injection, but rather a moderate temperature injection, as defined above, and at pressures in the range of 0.1 to 40 bar, preferably 0.5 to 30 bar, more preferably 1 to 20 bar, most preferably 2 to 15 bar. The methods are thus preferably low pressure molding processes. This avoids the high energy consumption and high demands with respect to mold materials and apparatus costs and complexity known for high temperature/pressure processes.

The curing is preferably carried out at a temperature of 100 to 140 °C, preferably 110 to 130°C. The temperature may be attained by heating the mold. Accordingly, the injection mold assembly may be equipped with the necessary means to allow heating thereof to the desired temperature. Again, this comparable low temperature has the above-described advantages. It is also understood that the curing temperature is selected such that it is above the activation temperature of the latent hardener in the PU composition, preferably at least 10°C above the activation temperature, preferably at least 20°C above the activation temperature of the hardener.

In various embodiments, the method further comprises the step (5) of cooling the injection mold assembly, preferably to a temperature in the range of the injection temperature or below.

In various embodiments, the complete heating/curing and optionally cooling cycle takes less than 3 minutes, preferably up to 65 seconds, 30 to 60 seconds. If the complete cycle has a length of up to 65 seconds, preferably 30 to 60 seconds, it can include a heating phase of 5 to 25 seconds, a dwell time at the curing temperature of 5 to 15 seconds, and a cooling phase of 5 to 25 seconds. The heating and optionally cooling rate preferably ranges from about 0.1 K/s to about 40 K/s, preferably 3 K/s to 9 K/s.

In various embodiments, the mold assembly comprises an article of manufacture. In such embodiments, the article of manufacture is placed inside the cavity of the mold assembly, which can be formed of a first and second member that if combined formed the mold cavity. The mold cavity may be formed such that it conforms to the shape of the article of manufacture and further forms a cavity around the article of manufacture such that the gasket can be formed. In various embodiments of the methods, the article of manufacture is placed in the mold and then steps (1) to (4)/(5) are carried out, such that the reactive heat-curable one-component PU composition is cured in situ on the article of manufacture to provide an integral gasket thereon. The article of manufacture may be selected from a cable, a connector, a sensor, and a printed circuit board, without being limited thereto.

The process may be carried out in typical molding apparatuses that are commercially available, for example those available from Optimel under the tradenames OM 655, 755, 760, 2000 and 2002.

In the methods of the invention, suitable equipment to process the heat curable one-component polyurethane composition may be provided, for example as part of the molding apparatus. As already described above, said apparatus may also comprise equipment to control and adjust the injection mold assembly temperature. Accordingly, in the methods of the invention, there may also be provided equipment to allow controlling and adjusting the temperature of the injection mold assembly.

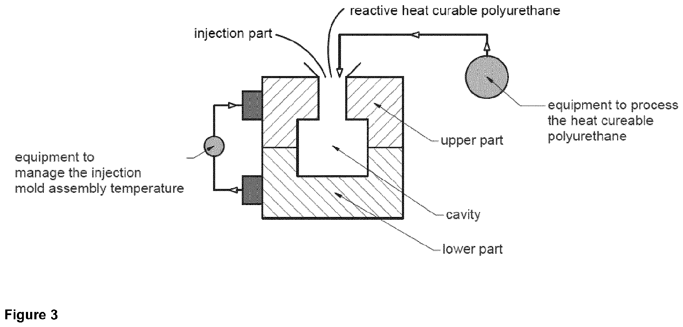

The apparatus and equipment to carry out the inventive methods is schematically shown in Figure 3.

The molds may be coated with a release coating the prevents adhesion of the molded article after curing. Suitable release coatings are known to the skilled practitioners in the field.

The invention further relates to the molded articles obtainable using the described methods, in particular gaskets.

It is understood that all embodiments disclosed herein in relation to the methods of the invention are similarly applicable to molded articles, insofar applicable, and vice versa.

The following examples are given to illustrate the present invention. Because these examples are given for illustrative purposes only, the invention should not be deemed limited thereto.

### Examples

Experiments were conducted using a TEMPRO plus D Vario 180 as the tempering unit, an OPL 071 as the molding tool and Teroson 1510 (Henkel) as the molding material and a printed circuit board as an article of manufacture that is to be provided with an integral gasket. The molding inserts were tested using a PTFE demolding spray or being equipped with a permanent release coating.

The board was placed in the mold assembly and the mold heated to a temperature of 60°C. Then the molding material was injected into the injection mold assembly. The mold was heated to 115°C for curing for a time period of 12 seconds and then cooled to 60°C over a time period of 30 seconds. A cured molded article that could be easily removed from the mold assembly was obtained.

Ageing tests of the molded electronic article were performed for 500 hours at 85°C and 85 % relative humidity with no corrosion being observed and full functionality retained.

## Claims

1. Method for producing a molded article comprising:
(1) providing a reactive heat-curable one-component polyurethane (PU) composition;
(2) providing an injection mold assembly defining a cavity and an injection port communicating with the cavity;
(3) injecting the reactive heat-curable one-component PU composition into the cavity to fill the cavity; and
(4) curing the reactive heat-curable one-component PU composition by heating the injection mold assembly to form the molded article.

2. The method of claim 1, wherein the heat-curable one-component polyurethane composition comprises a latent hardener and a resin, the latent hardener preferably being an encapsulated polyisocyanate and the resin preferably comprising or consisting of at least one polyol and/or polyamine.

3. The method of claim 1 or 2, wherein the step of injecting the reactive heat-curable one-component PU composition into the cavity is carried out
(i) at a temperature of about 40 to about 60°C, preferably 50 to 60°C; and/or
(ii) at a pressure of 0.1 to 40 bar, preferably 1 to 20, more preferably 2 to 15 bar.

4. The method of any one of claims 1 to 3, wherein the step of curing the reactive heat-curable one-component PU composition is carried out at a temperature of 100 to 140°C, preferably 110 to 130°C.

5. The method of any one of claims 1 to 4, wherein the method further comprises the step (5) of cooling the injection mold assembly.

6. The method of claim 5, wherein the complete heating cycle takes up to 65 seconds, preferably 30 to 60 seconds, more preferably including a heating phase of 5 to 25 seconds, a dwell time at the curing temperature of 5 to 15 seconds, and a cooling phase of 5 to 25 seconds.

7. The method of any one of claims 1 to 6, wherein the mold assembly comprises an article of manufacture and the reactive heat-curable one-component PU composition is cured in situ on the article of manufacture to provide an integral gasket thereon.

8. The method of claim 7, wherein the article of manufacture is selected from a cable, a connector, a sensor, and a printed circuit board.

9. Molded article obtainable according to the method of any one of claims 1 to 8.
